# EUROPEAN PATENT SPECIFICATION

(11) **EP 2 128 949 B1**
(45) Date of publication and mention of the grant of the patent: **08.12.2010**
(21) Application number: 08009540.9
(22) Date of filing: 26.05.2008
(51) Int. Cl.: H02G 3/12

(54) **Improved mounting frame for application modules**
Verbesserter Montagerahmen für Anwendungsmodule
Cadre de montage amélioré pour modules d'application

(43) Date of publication of application: 02.12.2009
(73) Proprietor: NIKO, N.V., 9100 Sint-Niklaas (BE)
(72) Inventor: Tas, Johan Helena Alice, 9100 Sint-Niklaas (BE)
(74) Representative: Van Ballaer, Evi Maria August

(56) References cited:
- EP-A- 0 837 535
- DE-A1- 2 204 221
- DE-A1- 19 814 567

## Description

### Field of the Invention

The present invention generally relates to a mounting frame for affixing application modules, e.g. electrical modules like a power socket-outlet for a plug of any electrical device, a switch, a socket-outlet for data connection, etc. The application modules may also be of another kind, such as for example gas connections or luminaires.

### Background of the Invention

The present invention relates to a mounting frame that is advantageously applied in a so called medical supply unit, usually provided above or near a hospital bed. Such a medical supply unit, usually Installed against the wall above or near the head side of the hospital bed, can be provided with several functions, from compressed air to data connections. Such medical supply units are for example known from and commercialized by Trilux.

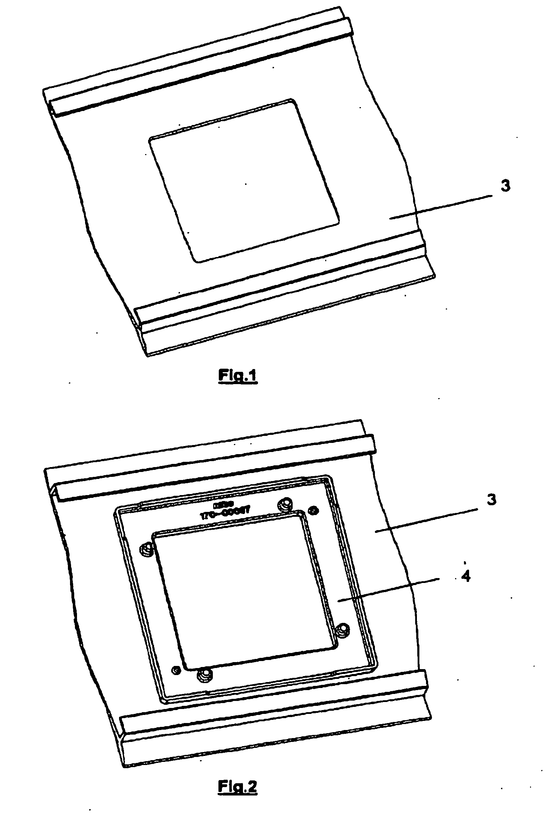

The front side of such a medical supply unit usually consists of a single aluminium profile which for maintenance reasons is preferably flat at the side meant to be positioned at the outside of the medical supply unit, while at the opposite side it is provided with elongate ribs (as shown in Fig.1) to fit the profile into the medical supply unit and for installing mounting frames for the application modules, hereby avoiding the use of screws or any other irregularities at the front side.

Such a medical supply unit profile is further provided with openings allowing the application module to reach from the back side to the front side. Known mounting frames for such application modules are generally square shaped and flat and can be slid between two opposing L-shaped ribs provided on the back of the medical supply unit profile.

A disadvantage of such known mounting frames is that they require a lot of preparation and a final mounting plan of the complete medical supply unit. Indeed, sliding in the mounting frames requires a detailed vision on the end product and it is time consuming.

An alternative known mounting frame as described in EP 837535-A1 is provided with resilient portions which allow to dips the mounting frames into the medical supply unit profile.

However, it is known that resiliently applied mounting frames cannot easily be displaced after their affixation and that they are generally expensive to produce and furthermore fragile. Moreover, such a mounting frame with resilient portions requires accurate mounting because otherwise the mounting frame might be pushed out of its weakly secured position. If this happens after the medical supply unit has been taken into use, the medical supply unit would require a complete disassembly. A further drawback is that this design does not allow for a standard flush mounted functionality, such as power socket, switches, data applications.

An improvement is proposed in European patent application 07115630, where a rectangular mounting frame is disclosed having at least one rounded corner, whereby the distance between the at least one rounded corner and the diagonally opposing corner is of the same magnitude as the frame length, such that rotation towards its final is possible, which eases the mounting of the frame.

However, this solution suffers from the following drawback. Each time a force is exerted on the part protruding from the medical supply unit profile, the mounted module can slightly be moved back. In worst case, the installed module can slide partially behind the profile. This is due to the fact that between the mounting frame and the profile a resilient element is provided to compensate for dimensional tolerances on the profile. Consequently, there is a need for an improved mounting frame that overcomes this problem.

### Aims of the invention

. The present invention aims to provide a mounting frame that overcomes the above-mentioned problems of the prior art solutions. The invention also aims to provide an assembly comprising such a mounting frame. In a further aspect the invention aims to provide a method for mounting an application module into a medical supply unit profile.

### Summary

The present invention relates to a mounting frame for affixing an application module. The mounting frame is provided with at least one hinge, so positioned on the mounting frame that the mounting frame can be folded during mounting.

In a preferred embodiment the mounting frame has a substantially rectangular shape.

In an advantageous embodiment the mounting frame comprises two hinges. The hinges are preferably provided in substantially the middle of opposing sides of the substantially rectangular shaped mounting frame.

In another preferred embodiment the mounting frame is made of an elastic material.

In another aspect the invention relates to an assembly of a medical supply unit profile and a mounting frame for affixing an application module. The medical supply unit profile is provided with a T-profile shaped longitudinal slot and at least one opening for the application module. The mounting frame has at least one hinge, such that the mounting frame can be folded when mounting the frame into the T-profile shaped longitudinal slot.

In an advantageous embodiment the assembly further comprises an adaptor arranged for being placed between the medical supply unit profile and the mounting frame.

In a further aspect the invention relates to a method for mounting an application module into a medical supply unit profile provided with a T-profiile shaped longitudinal slot. The method comprises the steps of:
- mounting the application module through an opening in the medical supply unit profile, and
- affixing the application module to the medical supply unit profile by inserting a mounting frame into the T-profile shaped slot, whereby the mounting frame comprises at least one hinge, so positioned on the mounting frame that the frame can be folded during mounting.

### Brief Description of the Drawings

Fig. 1 illustrates the back side of a medical supply unit profile.

Fig. 2 illustrates the mounting of an adaptor on the medical supply unit profile.

Fig. 3 illustrates the mounting of an electrical module on the profile.

Fig. 4 illustrates the mounting of the frame according to the present invention.

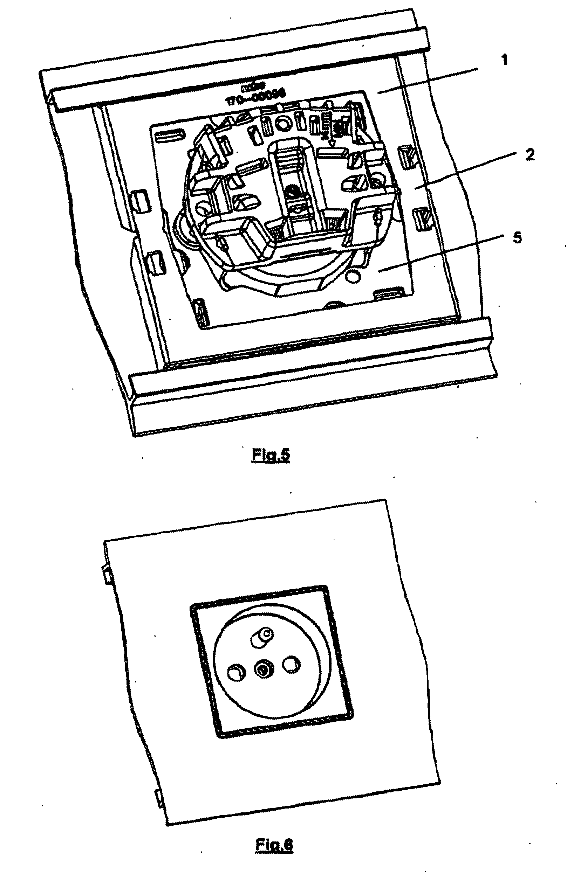

Fig. 5 illustrates the electrical module and frame mounted on the medical supply unit profile.

Fig. 6 illustrates a front view of the medical supply unit profile provided with an electrical module.

### Detailed Description of Embodiment(s)

The present invention overcomes the problems of the prior art solutions by proposing a mounting frame having a hinge, that allows the frame to be somewhat folded during mounting. The use of the mounting frame overcomes the above-mentioned problem of moving or sliding of the application module.

A method of mounting an application module into a medical supply unit profile according to the present invention is described below. Further details on the mounting frame and the assembly of the mounting frame and a medical supply unit profile are provided as well.

The back side of a medical supply unit profile was already shown in Fig.1. The medical supply unit profile is provided on the back side with two L-shaped ribs of which the respective free extremities are oriented towards each other. The mounting frame can be inserted between the two L-shaped ribs provided on the back side of the profile, which form a T-profile shaped longitudinal slot which is open towards the back side of the profile and serves for holding and for retaining mounting frames from the electric module. The mounting frame has an adjustable width, in that the frame becomes smaller by bending or folding such that it can be placed between L shaped ribs. The frame comprises at least one hinge. Once the frame is positioned between the ribs, by pushing, the frame regains it original (non-folded) shape and hooks behind the ribs. The flexibility of the frame material or a hinge can be exploited to bend the frame during assembly.

In an advantageous embodiment an adaptor can be used to adjust the position of the flush mounted functions in order to use the mounting frame in horizontally and vertically placed medical supply units. The adaptor is mounted first as shown in Fig.2. The adaptor offers the further advantage that it prevents the moving parts like the rocker of a switch from sliding against sharp edges of the profile.

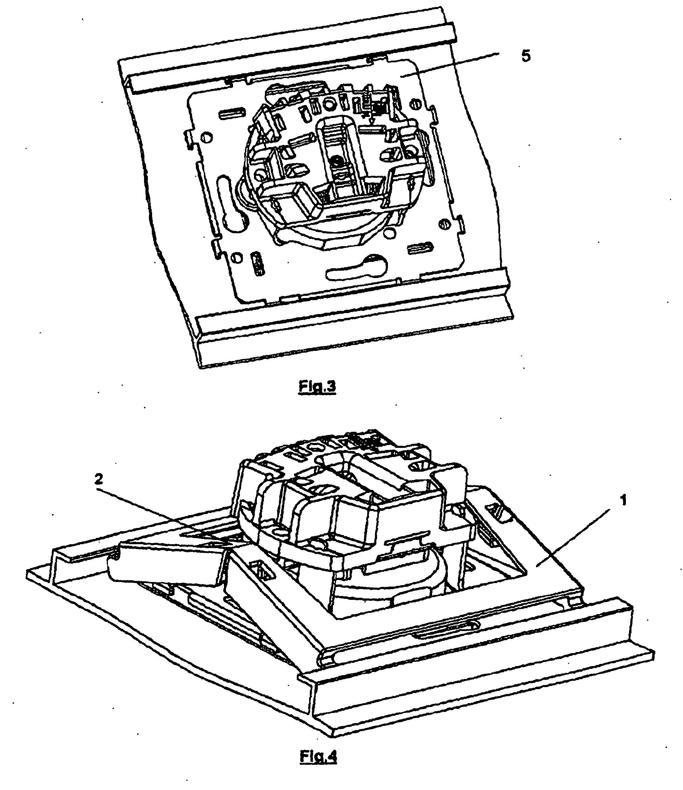

Next the application module (e.g. an electrical module) can be mounted, as shown in Fig.3. The central portion of the adaptor in the shown example is provided of a square opening. Also the base plate of the medical supply unit profile is provided of a series of corresponding square openings. A square shaped protruding portion of the electric module is provided through the square opening in the adaptor and also through the square opening in the base plate of the medical supply unit profile. The openings in the profile and in the adaptor ought to be situated in line of each other. More in particular, the front side of the square shaped protruding portion of the electric module is meant to be in line with the front side of the medical supply unit profile, which facilitates the cleaning and avoids the accumulation of dirt. For the same reasons, and also for accurately affixing the electric module and the adaptor with respect to the medical supply unit profile, the shape and the measurements of the protruding portion of the electric module correspond, taking into account an appropriate tolerance, with the shape and the measurements of the openings in the base plate of the medical supply unit profile.

Fig.4 illustrates the mounting of the frame according to the present invention. As the frame can be folded along the hinge(s) when mounting, the mounting operation is greatly simplified.

The hinge is preferably a living hinge, i.e. a thin flexible hinge (made e.g. of plastic) that joins two rigid parts together. A living hinge is well known in the art and is typically manufactured in an injection molded operation that creates all three parts at one time as a single part.

It is to be noted that the protruding portion of the application module and the corresponding openings in the adaptor, the mounting frame and base plate of the profile generally can be of any shape, for instance rectangular, square, triangular, circular, oval, etc., depending on the application, design aspects, esthetical preferences, etc. The mounting frame may also be implemented, for example, as a printed circuit board wherein a single hinge is provided.

Although the present invention has been illustrated by reference to specific embodiment, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic undertying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A mounting frame (1) for affixing an application module (5), said mounting frame being provided with at least one hinge (2) and **characterised in that** the at least one hinge (2) is so positioned on the mounting frame that the mounting frame has an adjustable width and can be folded during mounting.

2. The mounting frame as in claim 1, wherein the mounting frame has a substantially rectangular shape.

3. The mounting frame as in claim 1 or 2, wherein the mounting frame comprises two hinges.

4. The mounting frame as in claim 3, wherein said hinges are provided substantially in the middle of opposing sides of said substantially rectangular shaped mounting frame.

5. The mounting frame as in any of claims 1 to 4, made of an elastic material.

6. The mounting frame as in any of the claims 1 to 5, capable of regaining a non-folded shape after mounting.

7. An assembly of a medical supply unit profile (3) and a mounting frame (1) for affixing an application module (5), whereby the medical supply unit profile is provided with a T-profile shaped longitudinal slot and at least one opening for said application module and .whereby the mounting frame is provided with at least one hinge, such that the mounting frame has an adjustable width and can be folded when mounting the frame into said T-profile shaped longitudinal slot.

8. The assembly as in claim 7, further comprising an adaptor (4) arranged for being placed between the medical supply unit profile and the mounting frame.

9. Method for mounting an application module (5) into a medical supply unit profile (3) provided with a T-profile shaped longitudinal slot, comprising the steps of :
- mounting said application module through an opening in said medical supply unit profile, and
- affixing said application module to said medical supply unit profile by inserting a mounting frame (1) into said T-profile shaped slot, said mounting frame comprising at least one hinge, so positioned on the mounting frame that the mounting frame has an adjustable width and is folded during mounting.

10. Method for mounting an application module as in claim 9, wherein said mounting frame is inserted by hooking the mounting frame behind ribs of said T-profile shaped slot.

11. Method for mounting an application module as in claim 9 or 10, further comprising the step of providing an adaptor between the medical supply unit profile and the mounting frame.

## Patentansprüche

1. Ein Montagerahmen (1) zur Befestigung eines Anwendungsmoduls (5), wobei der genannte Montagerahmen mit mindestens einem Scharnier (2) versehen und **DADURCH GEKENNZEICHNET DASS** mindestens ein Scharnier (2) so an dem Montagerahmen angeordnet ist, dass der Montagerahmen in der Breite verstellbar ist und während der Montage zusammengeklappt werden kann.

2. Montagerahmen nach Anspruch 1, bei dem der Montagerahmen im Wesentlichen eine rechteckige Form aufweist.

3. Montagerahmen nach Anspruch 1 oder 2, bei dem der Montagerahmen aus zwei Scharnieren besteht.

4. Montagerahmen nach Anspruch 3, bei dem die genannten Scharniere im Wesentlichen in der Mitte von gegenüberliegenden Seiten des im Wesentlichen rechteckig geformten Montagerahmens angeordnet sind.

5. Montagerahmen nach einem der Ansprüche 1 bis 4, der aus elastischem Material hergestellt ist.

6. Montagerahmen nach einem der Ansprüche 1 bis 5, der in der Lage ist, nach der Montage wieder eine nicht zusammengeklappte Form anzunehmen.

7. Eine Baugruppe, bestehend aus einem medizinischen Versorgungseinheitsprofil (3) und einem Montagerahmen (1) zur Befestigung eines Anwendungsmoduls (5), wodurch das medizinische Versorgungseinheitsprofil mit einem T-Profil-förmigen Längsschlitz und mindestens einer Öffnung für das genannte Anwendungsmodul versehen wird und wodurch der Montagerahmen mit mindestens einem Scharnier ausgestattet wird, so dass der Montagerahmen in der Breite verstellbar ist und sich zusammenklappen lässt, wenn der Rahmen in dem genannten T-Profil-förmigen Längsschlitz montiert wird.

8. Baugruppe nach Anspruch 7, die darüber hinaus einen Adapter (4) enthält, der so angebracht ist, dass er zwischen dem medizinischen Versorgungseinheitsprofil und dem Montagerahmen angeordnet werden kann.

9. Verfahren zur Montage eines Anwendungsmoduls (5) in einem medizinischen Versorgungseinheitsprofil (3), das mit einem T-Profil-förmigen Längsschlitz versehen ist, bestehend aus den Schritten:
- zur Montage des genannten Anwendungsmoduls durch eine Öffnung in dem genannten medizinischen Versorgungseinheitsprofil und
- der Befestigung des genannten Anwendungsmoduls an dem genannten medizinischen Versorgungseinheitsprofil durch Einsetzen eines Montagerahmens (1) in den genannten T-Profil-förmigen Schlitz, wobei der Montagerahmen aus mindestens einem Scharnier besteht, das so am Montagerahmen angeordnet ist, dass der Montagerahmen in der Breite verstellbar ist und bei der Montage zusammengeklappt wird

10. Verfahren zur Montage eines Anwendungsmoduls nach Anspruch 9, bei dem der Montagerahmen durch Einhaken des Montagerahmens hinter den Rippen des genannten T-Profil-förmigen Schlitzes eingesetzt wird.

11. Verfahren zur Montage eines Anwendungsmoduls nach Anspruch 9 oder 10, das darüber hinaus den Schritt zur Bereitstellung eines Adapters zwischen dem medizinischen Versorgungseinheitsprofil und dem Montagerahmen umfasst.

## Revendications

1. Un support de montage (1) pour la fixation d'un module d'application (5), ledit support de montage est muni au moins d'une charnière (2) et est **CARACTÉRISÉ EN CE QUE** ledit au moins une charnière (2) est positionnée sur le support de montage de sorte que ledit support de montage dispose d'une largeur adaptable et puisse être replié durant le montage.

2. Le support de montage selon la revendication 1, dans lequel le support de montage et de forme principalement rectangulaire.

3. Le support de montage selon la revendication 1 ou 2, dans lequel le support de montage comprend deux charnières.

4. Le support de montage selon la revendication 3, dans lequel lesdites charnières sont principalement disposées au milieu des côtés opposés dudit support de montage de forme principalement rectangulaire.

5. Le support de montage selon l'une des revendications 1 à 4, et fabriqué en matériau élastique.

6. Le support de montage selon l'une des revendications 1 à 5, et capable de restaurer sa forme non repliée après montage.

7. L'assemblage d'un profil pour bloc d'alimentation médical (3) et d'un support de montage (1) pour la fixation d'un module d'application (5), dans lequel le profil pour bloc d'alimentation médical est muni d'une rainure longitudinale en T et au moins d'une ouverture pour ledit module d'application et dans lequel le support de montage est pourvu au moins d'une charnière, de telle manière que sa largeur soit ajustable et qu'il puisse être replié lors du montage du support dans ladite rainure longitudinale en T.

8. L'assemblage selon la revendication 7, comprenant en outre un adaptateur (4) pouvant être placé entre le profil pour bloc d'alimentation médical et le support de montage.

9. Méthode pour le montage d'un module d'application (5) sur un profil pour bloc d'alimentation médical (3) muni d'une rainure longitudinale en T, laquelle méthode comprend les étapes suivantes:
- montage ledit module d'application au travers d'une ouverture dans ledit profil pour bloc d'alimentation médical, et
- fixation ledit module d'application sur ledit profil pour bloc d'alimentation médical par l'insertion d'un support de montage (1) dans ladite rainure en T, ledit support de montage comprenant au moins une charnière de sorte que ce le support de montage dispose d'une largeur ajustable et puisse être replié durant le montage.

10. Méthode pour le montage d'un module d'application selon la revendication 9, avec ledit support de montage accroché derrière les brides de ladite rainure en T.

11. Méthode pour le montage d'un module d'application selon la revendication 9 ou 10, comprenant par ailleurs une étape visant à ajouter un adaptateur entre le profil pour bloc d'alimentation médical et le support de montage.
